# FASCICULE DE BREVET EUROPEEN

(11) **EP 2 306 049 B1**
(45) Date de publication et mention de la délivrance du brevet: **09.05.2012**
(21) Numéro de dépôt: 10183280.6
(22) Date de dépôt: 30.09.2010
(51) Int. Cl.: F16H 61/30, F16H 3/095, F16H 3/097

(54) **Boîte de vitesse à deux rapports pour broche de machine outil**
Getriebe mit zwei Übersetzungsverhältnissen für Werkzeugmaschinenspindel
Gearbox with two gears for a machine tool spindle

(30) Priorité: 02.10.2009 FR 0904739
(43) Date de publication de la demande: 06.04.2011
(73) Titulaire: REDEX, 45210 Ferrieres (FR)
(72) Inventeur: Casanova, Pierre, 45200, MONTARGIS (FR); Vaslier, Pierre, 45270, LADON (FR); Tetart, Jean-Bernard, 91450, SOISY SUR SEINE (FR); Grandjean, Bruno, 77300, FONTAINEBLEAU (FR)
(74) Mandataire: Parzy, Benjamin Alain

(56) Documents cités:
- FR-A- 933 111
- FR-A- 1 261 415
- FR-A1- 2 861 446
- US-A- 5 899 121

## Description

La présente invention concerne une boîte de transmission dans laquelle l'arbre d'entrée et l'arbre de sortie sont coaxiaux.

### ARRIERE PLAN DE L'INVENTION

Les dispositifs de ce type sont utilisés dans de nombreux domaines pour établir au moins un rapport de transmission entre la vitesse de rotation d'un arbre menant et celle d'un arbre mené. Ce rapport est en général réducteur. Certaines boîtes comportent également un mécanisme permettant de changer le rapport de transmission. Il s'agit alors d'une boîte de vitesses qui offre la plupart du temps deux rapports de transmission dont l'un est une prise directe (rapport égal à un).

Dans le domaine particulier des boîtes de transmission pour centre d'usinage ou machine-outil, celles-ci sont intégrées avec l'arbre porte-outils dans une seule broche intercalée entre le moteur et l'outil. Dans un souci de limiter au maximum l'encombrement de la machine, il est connu d'utiliser des arbres d'entrée et de sortie creux afin de pouvoir loger divers organes dans l'espace central de la ligne d'arbre.

Ce type de boîte comprend un boîtier extérieur formant ou comprenant des paliers de soutien pour un arbre d'entrée, pour des tourillons de roues satellites et pour un arbre de sortie. Le boîtier constitue donc un porte-satellite fixe pour un train d'engrenages épicycloïdal à deux étages, c'est-à-dire que l'arbre d'entrée porte une roue d'entrée qui engrène avec des roues satellites calées sur les tourillons de roues satellites. Ces tourillons portent également, immobilisés en rotation, des roues satellites du deuxième étage du train d'engrenages épicycloïdal qui engrène avec une roue de sortie qui est montée guidée en rotation à la fois dans le boîtier et sur l'arbre d'entrée. Pour les boîtes de transmission à deux vitesses, un baladeur creux assure la liaison en rotation d'un arbre de sortie avec soit cette roue de sortie (transmission démultipliée dans un rapport donné) soit la roue ou l'arbre d'entrée (prise directe).

La manoeuvre du baladeur et assurée dans la plupart des cas, au moyen d'une tringlerie de commande reliant un actionneur (par exemple un vérin) au baladeur, à l'extérieur de celui-ci, ce qui demande de prévoir un carter ou boîtier extérieur d'un diamètre important pour loger ce mécanisme.

Une telle boîte de transmission est notamment illustrée par le document FR 2 861 446. Ce document montre les caractéristiques du préambule de la revendication 1.

Dans l'objectif de diminuer cet encombrement, l'invention entend proposer un moyen d'actionnement du baladeur beaucoup plus compact tant longitudinalement que transversalement.

### OBJET DE L'INVENTION

C'est ainsi que l'invention a pour objet une boîte de transmission à train d'engrenages de type épicycloïdal pour broche de machine outil comportant :
- un boîtier fixe englobant :
- un arbre d'entrée portant une roue centrale d'entrée et tournant autour d'un axe principal (X) ;
- un arbre de sortie coaxial à l'arbre d'entrée ;
- une roue centrale de sortie coaxiale à l'arbre d'entrée ;
- des satellites ayant des roues engrenant avec la roue centrale d'entrée et la roue centrale de sortie,
- un dispositif de crabotage mobile le long de l'axe principal (X) entre une première position de crabotage dans lequel l'arbre de sortie est accouplé à la roue centrale d'entrée en prise directe et une deuxième position de crabotage dans laquelle l'arbre de sortie est accouplé à la roue centrale de sortie, établissant ainsi un rapport de réduction entre l'arbre d'entrée et l'arbre de sortie.

Selon l'invention, le dispositif de crabotage comprend un baladeur pourvu de deux jeux de crabots et un piston tubulaire attelé axialement au baladeur et qui est monté à coulissement dans un corps de vérin fixe solidaire du boîtier et dans lequel il définit deux chambres annulaires isolées à étanchéité l'une de l'autre et à volume variable, les chambres étant reliées sélectivement à une source de fluide sous pression et à un échappement.

L'alimentation de l'une des chambres par un fluide sous pression pendant que l'autre est mise à l'échappement permet d'engendrer un déplacement du piston annulaire dans le corps du vérin et ainsi d'atteindre l'une ou l'autre des positions de crabotage.

Les machine d'usinage qui sont équipées de ces broches disposent de fluide sous une pression relativement élevée, de l'ordre de 100 à 150 bars. Ces valeurs de pression permettent alors de réaliser des chambres hydrauliques de très faible volume, l'épaisseur de chaque chambre annulaire étant de l'ordre du millimètre. L'encombrement transversal du vérin à piston annulaire selon l'invention est alors réduit.

Une autre particularité de l'invention réside également dans les moyens de détection de l'état de crabotage du baladeur donc de la liaison de l'arbre de sortie et du rapport de transmission correspondant.

Cette particularité tient à la structure du vérin entre les deux chambres. L'isolement étanche des deux chambres est réalisé par une série d'au moins trois joints annulaires axialement espacés les uns des autres pour qu'une gorge puisse être ménagée chaque fois entre deux joints consécutifs. Par ailleurs le piston comporte une empreinte (ou plus généralement un canal de shunt) qui constitue un canal de liaison entre la chambre qui est en pression et la gorge la plus voisine de cette chambre lorsque le piston est dans l'une et l'autre des positions de crabotage susdites. Cette liaison n'est effective qu'en fin de course, quand l'empreinte est située sous le joint, si bien que l'apparition d'une pression dans la gorge voisine de la chambre en pression est une grandeur physique qui peut être détectée par tout capteur approprié et constituer un signal de fin de course.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels :
- la figure 1 est un schéma illustrant la constitution générale d'une boîte de transmission conforme à l'invention,
- les figures 2 et 3 sont des vues de détail partielles en coupe du vérin moteur du baladeur illustrant chacune des états de crabotage.

### DESCRIPTION DETAILLEE DE L'INVENTION

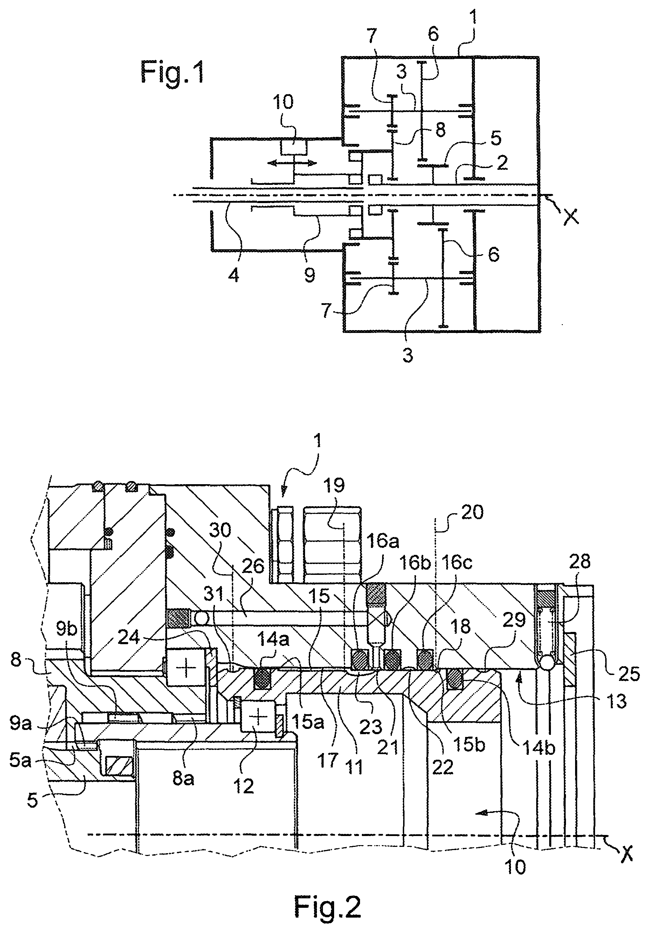

A la figure 1, on a représenté une boîte de transmission qui comprend un boîtier extérieur 1, formant ou comprenant des paliers de soutien pour un arbre d'entrée 2 monté tournant selon un axe principal X, pour des tourillons de roues satellites 3 et pour un arbre de sortie 4 coaxial à l'arbre d'entrée 2.

Le boîtier 1 constitue donc un porte-satellite fixe pour un train d'engrenages épicycloïdal à deux étages. En d'autres termes, l'arbre 2 porte une roue d'entrée 5 qui engrène avec des roues satellites 6 calées sur les tourillons de roues satellites 3. Ces tourillons 3 portent également, immobilisés en rotation, des roues satellites 7 du deuxième étage du train d'engrenages épicycloïdal qui engrènent avec une roue de sortie 8 qui est montée guidée en rotation selon l'axe X à la fois dans le boîtier 1 et sur l'arbre d'entrée 2. Cette roue de sortie 8 peut être crabotée au moyen d'un dispositif 9 à l'arbre de sortie 4 lorsque le dispositif 9 est dans sa position représentée à la figure 1. ou, dans une deuxième position du dispositif de crabotage 9, n'être reliée à aucune sortie alors que le dispositif de crabotage relie en rotation les arbres d'entrée 2 et de sortie 4 (prise directe).

Le dispositif 9 est en forme de baladeur tubulaire qui coulisse le long de l'arbre de sortie 4 auquel il est lié en rotation par exemple au moyen de cannelures. Il comprend des moyens 10 de sa commande en déplacement axial qui permettent d'établir sélectivement l'un des deux rapports de transmission.

Les arbres d'entrée 2 et de sortie 4 peuvent être tubulaires. Leur évidement intérieur aligné constitue un passage pour des moyens devant atteindre l'outil de coupe que ce soit un outillage ou une canalisation.

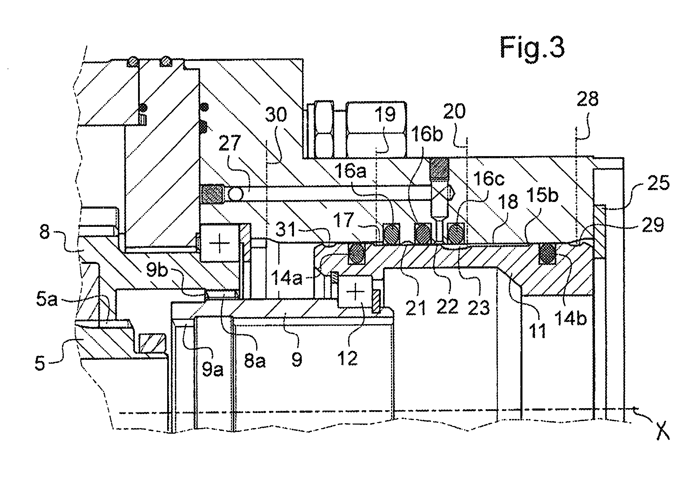

Aux figures 2 et 3 on retrouve certains des éléments déjà décrits avec les mêmes références. Le plan de coupe de chaque figure est radial mais est différent d'une figure à l'autre. On comprend bien que, pour des raisons de commodité et d'encombrement, la répartition des organes notamment de liaison de la boîte de transmission à l'extérieur (commande, sources d'alimentation en fluide comprimés, capteurs et leur sorte,...) sont distribués autour de l'axe de la boîte dans de nombreux plans radiaux différentes.

On constate à la figure 2 que le baladeur 9 possède des dents de crabotage 9a qui sont en prise avec des dents de crabotage 5a de la roue d'entrée 5 du train épicycloïdal. A la figure 3, le baladeur est en prise par ses dents 9b avec les dents 8a de la roue de sortie 8 du train épicycloïdal.

Le baladeur 9 est attelé axialement à un piston tubulaire 11, qui appartient aux moyens 10 de a commande n déplacement, au moyen d'un palier à roulements 12. Ce piston 11 et monté à coulissement sur une portée tubulaire 13 d'un corps la de vérin qui est solidaire du boîtier 1 de la boîte de transmission. A chacune de ses extrémités, le piston est équipé d'un joint 14a et 14b de manière à créer un coulissement étanche dans le corps la du piston et d'isoler un espace annulaire, formé entre cette portée 13 et le piston par une gorge 15 réalisée sur la surface externe du piston. Cette gorge 15 est terminée axialement par deux flancs 15a et 15b dont la projection sur un plan radial conne la valeur de la surface utile du piston dans son utilisation décrite ci-après.

La portée 13 est quant à elle, équipée de trois joints 16a, 16b, 16c qui sont en regard du fond de la gorge 15 et qui divisent ainsi l'espace annulaire susdit en deux chambres de pilotage du piston, l'une 17 entre le joint 16a et le flanc 15a et l'autre 18 entre le joint 16c et le flanc 15b. Ces chambres sont reliées à une source de fluide sous pression et à une bâche de retour par des conduits symbolisés par les traits mixtes 19 et 20 (les conduits n'appartenant pas aux plans des figures. Des moyens de mise en communication sélective des chambres 17 et 18 avec la source de pression ou avec la bâche ne sont pas représentés car connus en eux-mêmes sous forme par exemple de distributeurs pilotés, extérieurs à la boîte de transmission.

Sur ces figures, on notera l'existence entre les joints 16 de deux gorges 21 et 22 ménagées dans la portée 13 et isolées l'une de l'autre et de chaque chambre 17, 18.

Le piston 11 possède une empreinte 23, ménagée en creux dans le fond de la gorge 15. L'emplacement et la dimension axiale de celle-ci sont tels que, lorsque le piston 11 est au voisinage d'une première butée de fin de course 24 qui correspond à l'état de crabotage de la figure 2 (prise directe), l'empreinte 23 établit une communication entre la chambre 17 et la gorge 21. La pression de la chambre 17 règne donc dans la gorge 21 lorsque cette proximité existe, c'est-à-dire quand le piston parvient au contact de la butée ou lorsque le piston quitte ce contact.

De manière symétrique, l'emplacement et la dimension axiale de cette empreinte 23 sont tels que, lorsque le piston 11 est au voisinage d'une deuxième butée de fin de course 2 (qui correspond à l'état de crabotage de la figure 3 (transmission avec un rapport différent de un), l'empreinte 23 établit une communication entre la chambre 18 et la gorge 22. La pression de la chambre 18 règne donc dans la gorge 22 lorsque cette proximité existe, c'est-à-dire quand le piston parvient au contact de la butée ou lorsque le piston quitte ce contact.

Des canalisations 26, 27 interne au corps la du vérin sont respectivement issues des gorges 21 et 22 et permettent de conduire l'état de pression régnant dans celles-ci à un détecteur non représenté qui permet d'indiquer l'état de crabotage dans lequel se trouve la boîte de transmission donc le rapport de transmission établi.

On notera enfin, notamment sur la figure 2 la présence d'un verrou élastique à bille 28 qui fait saillie de la portée 13 du corps 11 de manière à être en prise avec une gorge 29 du piston 11 quand ce dernier est au contact de la butée 25. La même disposition est prévue à l'autre extrémité de cette portée 13 de sorte qu'un verrou 30 coopère avec une gorge 31 du piston quand ce dernier est au contact de la butée 24. L'effort de verrouillage est bien entendu vaincu par la force de déplacement du piston quand une pression est admise dans l'une ou l'autre des chambres 17 et 18. Le rôle de ce verrou est de maintenir en l'état la boîte de transmission s'il survient une défaillance dans l'alimentation du vérin de commande du baladeur de sorte qu'après réparation, cet état soit conservé à la remise en route de la machine, alors que par exemple la force de pesanteur aurait pu conduire à un changement d'état dans le crabotage, voire à une immobilisation du baladeur dans un état intermédiaire instable au moment de la remise en route.

Le fonctionnement de la boîte de transmission selon l'invention est classique et connu en lui-même dans chaque état crabotage. Pour changer d'état soit à l'arrêt de la machine, soit en marche, si le baladeur le permet (au moyen par exemple d'un synchroniseur), on alimente par de l'huile sous pression l'une des chambres 17 ou 18 et on met à l'échappement l'autre chambre. Le piston 11 quitte alors son état tandis que la pression chute dans la canalisation de détection 26 ou 27 concernée du fait de l'existence de l'empreinte 23. Le détecteur d'état correspondant est désactivé. Le piston parvient au contact de l'autre butée. L'autre canalisation de détection est mise sous pression par la communication établie entre elle et la chambre sous pression par l'empreinte 23, et le détecteur d'état correspondant est activé. La bille du verrou élastique 28,30, en même temps, est poussée par son ressort dans la gorge d'extrémité 29, 31 concernée.

## Revendications

1. Boîte de transmission à train d'engrenages de type épicycloïdal pour broche de machine outil comportant :
- un boîtier fixe (1) englobant :
- un arbre d'entrée (2) portant une roue centrale d'entrée (5) et tournant autour d'un axe principal (X) ;
- un arbre de sortie (4) coaxial à l'arbre d'entrée (2);
- une roue centrale de sortie (8) coaxiale à l'arbre d'entrée (2) ;
- des satellites ayant des roues (3) engrenant avec la roue centrale d'entrée (5) et la roue centrale de sortie (8),
- un dispositif de crabotage (9,10) comprenant un baladeur (9) pourvu de deux jeux (9a,9b) de crabots et monté mobile le long de l'axe principal (X) entre une première position de crabotage dans lequel l'arbre de sortie (4) est accouplé à la roue centrale d'entrée (5) en prise directe et une deuxième position de crabotage dans laquelle l'arbre de sortie (4) est accouplé à la roue centrale de sortie (8), établissant ainsi un rapport de réduction entre l'arbre d'entrée (2) et l'arbre de sortie (4),
**caractérisée en ce que** le dispositif de crabotage comprend un piston tubulaire (11) attelé axialement au baladeur (9) et monté à coulissement dans un corps (la) de vérin fixe solidaire du boîtier (1) et dans lequel il définit deux chambres annulaires (17,18) isolées à étanchéité l'une de l'autre et à volume variable, les chambres (17, 18) étant reliées sélectivement à une source de fluide sous pression et à un échappement.

2. Boîte de transmission selon la revendication 1, dans laquelle les deux chambres (17,18) sont isolées par une série d'au moins trois joints annulaires (16a,16b,16c) axialement espacés les uns des autres pour qu'une gorge (21,22) puisse être ménagée entre chaque paire de joints adjacents.

3. Boîte de transmission selon la revendication 2, dans laquelle le piston tubulaire (11) comporte un canal de shunt (23) qui constitue un canal de liaison entre celle des chambres (17,18) qui est en pression et la gorge (21,22) la plus voisine de cette chambre lorsque le piston (11) est dans l'une et l'autre des positions de crabotage.

4. Boîte de transmission selon la revendication 3, dans laquelle le canal de shunt est une empreinte ménagée en creux dans une surface extérieure du piston tubulaire (11).

5. Boîte de transmission selon la revendication 3, dans laquelle chaque gorge (21,22) est reliée à un détecteur de l'état de pression régnant dans la gorge, qui constitue un témoin de l'état de crabotage de la boîte de transmission.

6. Boîte de transmission selon l'une des revendications précédentes, comportant un verrou élastique (28,30) disposé à chaque extrémité du corps de vérin et formé par une bille poussée par un ressort, chaque extrémité du piston tubulaire (11) étant pourvue d'une gorge (29,31) pour accueillir la bille concernée quand le piston (11) est dans l'un ou dans l'autre état de verrouillage.

7. Boîte de transmission selon l'une des revendications précédentes, dans laquelle les chambres annulaires (17,18) sont formées par une gorge (15) ménagée dans la surface extérieure du piston dont la profondeur est de l'ordre du millimètre.

## Claims

1. A gearbox having an epicyclic type gear train for a machine tool spindle, the gearbox comprising:
• a stationary housing (1) containing:
an inlet shaft (2) carrying a central inlet gearwheel (5) and rotatable about a main axis (X);
• an outlet shaft (4) on the same axis as the inlet shaft (2);
• a central outlet gearwheel (8) on the same axis as the inlet shaft (2);
• planet gearwheels (3) meshing with the central inlet gearwheel (5) and with the central outlet gearwheel (8); and
• a clutch device (9, 10) comprising a sliding sleeve (9) provided with two sets (9a, 9a) of dogs and mounted to move along the main axis (X) between a first engaged position in which the outlet shaft (4) is coupled to the central inlet gearwheel (5) with direct engagement, and a second engaged position in which the outlet shaft (4) is coupled to the central outlet gearwheel (8), thereby establishing a step-down ratio between the inlet shaft (2) and the outlet shaft (4);
the gearbox being **characterized in that** the clutch device comprises a tubular piston (11) axially coupled to the sliding sleeve (9) and slidably mounted in a stationary actuator cylinder (1a) secured to the housing (1) and in which it defines two annular chambers (17, 18) that are of variable volume and isolated from each other in leaktight manner, the chambers (17, 18) being connected selectively to a source of fluid under pressure and to an exhaust.

2. A gearbox according to claim 1, wherein the two chambers (17, 18) are isolated by a series of at least three annular gaskets (16a, 16b, 16c) that are axially spaced apart from one another so that a groove (21, 22) can be arranged between each pair of adjacent gaskets.

3. A gearbox according to claim 2, wherein the tubular piston (11) includes a shunt channel (23) that constitutes a channel providing a connection between that one of the chambers (17, 18) that is under pressure and the groove (21, 22) that is closer to said chamber when the piston (11) is in one or the other of the engaged positions.

4. A gearbox according to claim 3, wherein the shunt channel is an indentation forming a recess in the outside surface of the tubular piston (11).

5. A gearbox according to claim 3, wherein each groove (21, 22) is connected to a detector for detecting the pressure state that exists in the groove, thereby constituting an indicator of the engagement state of the gearbox.

6. A gearbox according to any preceding claim, including a resilient latch (28, 30) arranged at each end of the actuator cylinder and formed by a ball biased by a spring, each end of the tubular piston (11) being provided with a groove (29, 31) to receive the ball in question when the piston (11) is in one or the other locking state.

7. A gearbox according to any preceding claim, wherein the annular chambers (17, 18) are formed by a groove (15) arranged in the outside surface of the piston and presenting a depth of millimeter order.

## Patentansprüche

1. Epizykloidisches Zahnradgetriebe für eine Werkzeugmaschinenspindel, umfassend:
- ein festes Gehäuse (1), das einschließt:
- eine Antriebswelle (2), die ein zentrales Antriebsrad (5) hält, und die sich um eine Hauptachse (X) dreht;
- einer Abtriebswelle (4) koaxial zur Antriebswelle (2);
- ein zentrales Abtriebsrad (8) koaxial zur Abtriebswelle (2);
- Planetenräder (3), die in das zentrale Antriebsrad (5) und das zentrale Abtriebsrad (8) eingreifen;
- eine Klauenkupplungsanordnung (9, 10), die ein Schiebeelement (9) enthält, das mit zwei Klauen-Sets (9a, 9b) versehen ist, und das entlang der Hauptachse (X) beweglich angeordnet ist zwischen einer ersten Position der Klauenkupplung, in welcher die Abtriebswelle (4) in direktem Eingriff an das zentrale Antriebsrad (5) angekuppelt ist, und einer zweiten Position der Klauenkupplung, in welcher die Abtriebswelle (4) an das zentrale Abtriebsrad (8) angekuppelt ist, wodurch eine Übersetzung ins Langsame zwischen der Antriebswelle (2) und der Abtriebswelle (4) hergestellt wird,
- **dadurch gekennzeichnet, dass** die Klauenkupplungsanordnung einen rohrförmigen Kolben umfasst (11), der axial gerichtet mit dem Schieberad (9) verbunden ist und sich gleitend in dem Zylindergehäuse (1a) eines Arbeitszylinders befindet, der mit dem Gehäuse (1) fest verbunden ist, und in welchem er zwei ringförmige Kammern (17, 18) definiert, die voneinander dicht isoliert sind und deren Volumen variabel ist, wobei die Kammern (17, 18) wahlweise mit einer Druckfluid-Quelle und mit einem Auslass verbunden sind.

2. Getriebe nach Anspruch 1, wobei die beiden Kammern (17, 18) durch eine Reihe von mindestens drei ringförmigen Dichtungen (16a, 16b, 16c) isoliert sind, die in axialer Richtung voneinander einen Abstand aufweisen, so dass zwischen jedem Paar benachbarter Dichtungen eine Nut (21, 22) ausgebildet werden kann.

3. Getriebe nach Anspruch 2, wobei der rohrförmige Kolben (11) einen Nebenschlusskanal (23) umfasst, der einen Verbindungskanal bildet zwischen derjenigen Kammer (17, 18), die unter Druck steht, und der Nut (21, 22), die sich am nächsten zu dieser Kammer befindet, wenn sich der Kolben (11) in der einen und in der anderen Position der Klauenkupplung befindet.

4. Getriebe nach Anspruch 3, wobei der Nebenkanal durch Einprägen einer Vertiefung in einer Außenfläche des rohrförmigen Kolbens (11) hergestellt ist.

5. Getriebe nach Anspruch 3, wobei jede Nut (21, 22) mit einem Druckdetektor verbunden ist zum Erfassen des Druckes in der Nut, der den Kupplungszustand des Getriebes anzeigt.

6. Getriebe nach einem der vorhergehenden Ansprüche, das an jedem Ende des Zylindergehäuses eine elastische Verriegelung (28, 30) umfasst, die durch eine Kugel gebildet wird, die von einer Feder vorgespannt wird, wobei jedes Ende des rohrförmigen Kolbens (11) mit einer Nut (29, 31) versehen ist, die zur Aufnahme der entsprechenden Kugel bestimmt ist, wenn sich der Kolben (11) in dem einen oder anderen Verriegelungszustand befindet.

7. Getriebe nach einem der vorhergehenden Ansprüche, wobei die ringförmigen Kammern (17, 18) durch eine Nut (15) gebildet werden, die in der Außenfläche des Kolbens ausgebildet ist und deren Tiefe in der Größenordnung von Millimetern liegt.
